Europäisches Patentamt

European Patent Office

Office européen des brevets

(11) Publication number: **0 156 593**
**A2**

(12) **EUROPEAN PATENT APPLICATION**

(21) Application number: **85301759.8**

(22) Date of filing: **14.03.85**

(51) Int. Cl.⁴: **G 06 K 11/06**
**G 06 F 3/037**

(30) Priority: **22.03.84 US 592191**

(43) Date of publication of application:
**02.10.85 Bulletin 85/40**

(84) Designated Contracting States:
**BE DE FR GB IT NL**

(71) Applicant: **AMP INCORPORATED**
P.O. Box 3608 449 Eisenhower Boulevard
Harrisburg Pennsylvania 17105(US)

(72) Inventor: **Carroll, Arthur B.**
207 Ridgewood Drive
Georgetown Texas 78626(US)

(72) Inventor: **Carstedt, John K.**
1300 Oakridge Drive
Round Rock Texas 78664(US)

(74) Representative: **Gray, Robin Oliver et al,**
BARON & WARREN 18 South End Kensington
London W8 5BU(GB)

(54) Method and apparatus for mode changes and/or touch mouse control.

(57) A method and device for instituting mode changes (78) or precise relative cursor (13) positioning is taught. Briefly stated, an operator who is interfacing with a CRT (10) or display area (12) which has a touch input device (51) on it, such as a switch matrix or infrared light beam matrix, may institute a number of changes simply by inserting two or more noncontiguous styli (18,18), such as two fingers, into the touch input area. This would, therefore, change the mode of information which is presented by the display to the operator (16) or the information presented to a computer or interface via the display area by the operator. In the preferred embodiment, the insertion of two noncontiguous fingers would allow the cursor (13) to be moved in a speed and direction which is directly related to the speed and direction of a finger with the result that the cursor need not be disposed directly under the finger which might otherwise block an operator's view and thereby allow more precise positioning of the cursor.

FIG.1

## METHOD AND APPARATUS FOR MODE CHANGES
## AND/OR TOUCH MOUSE CONTROL

This invention relates, generally, to a mouse and more particularly to a method and device for use of a touch input device so as to change program modes as well as move a cursor in a direction and/or speed relative to the direction and/or speed of a stylus.

Coincident with the use of video displays has always been the problem of the man/machine interface. Traditionally, control of information displayed or cursors has been via a keyboard. This is generally an inexpensive approach since keyboards are generally always necessary but have an inherent deficiency. This deficiency is the interruption of the train of thought of the operator in diverting the operator's attention between screen and keyboard and is particularly problematic with less skillful operators. Recently, a number of devices have been utilized to allow an operator to interact directly with the video display. These types of devices have included light pens, desk type mouse controllers or touch input devices, such as a switch matrix or opto-electronic matrices. Heretofore however, even this has required that an operator must go back and forth between display and a keyboard, whether it is to change modes or screens or whatever. Therefore, there is an ever-increasing effort to allow an operator to perform all or almost all functions directly from the video display without reverting to a keyboard. Accordingly, it is desirable to have a device which allows for as many commands or responses as possible to be fed through the display. These commands or responses may take the form of mode changes as well as gross or precise cursor movement. Further, it is desirable to have a device which does not require the use of mouse-type control units or keyboard operation. Such a scheme is taught in the present invention.

Accordingly, it is desirable to have and as an object of the present invention a device which provides a method and apparatus instituting program and/or mode changes as well as

0156593

for controlling movement of a cursor or the like on a video display which may be in a manner similar to a mouse mode comprising, a touch input entry device for determining the presence and/or position of one or more styli which are introduced to the touch input entry device, a controller device connected to the video display and to the touch input entry device, being adapted for a mouse mode such that upon the introduction of at least one stylus at any point on the touch input entry device, wherein the point need not be adjacent the cursor or the like, the cursor or the like is moved at a speed and/or direction and/or distance which is relative to any movement of the styli, and a touch input entry control device interconnected with the touch input entry device whereby upon the introduction of two or more noncontiguous styli to the touch input entry device, the controller is placed into a mouse mode and which is accomplished through the steps of introducing at least two noncontiguous styli to the touch input entry device, detection of at least two noncontiguous styli by the touch input entry device, changing the mode of cursor movement on the video display to a mouse mode in response to the detection of the styli, introduction of a stylus to the touch input entry device at any point on the touch input entry device wherein the point need not be adjacent the cursor and moving the cursor or the like at a speed and/or direction and/or distance which is relative to any movement of the stylus.

Reference is now made to the accompanying drawings in which:

FIGURE 1 is a representative view of an operator utilizing a video display;

FIGURE 2 is a functional block diagram for use in conjunction with the touch input entry device in the preferred embodiment of the present invention; and

FIGURES 3 through 7 are flow chart diagrams for use with the preferred embodiment of the present invention.

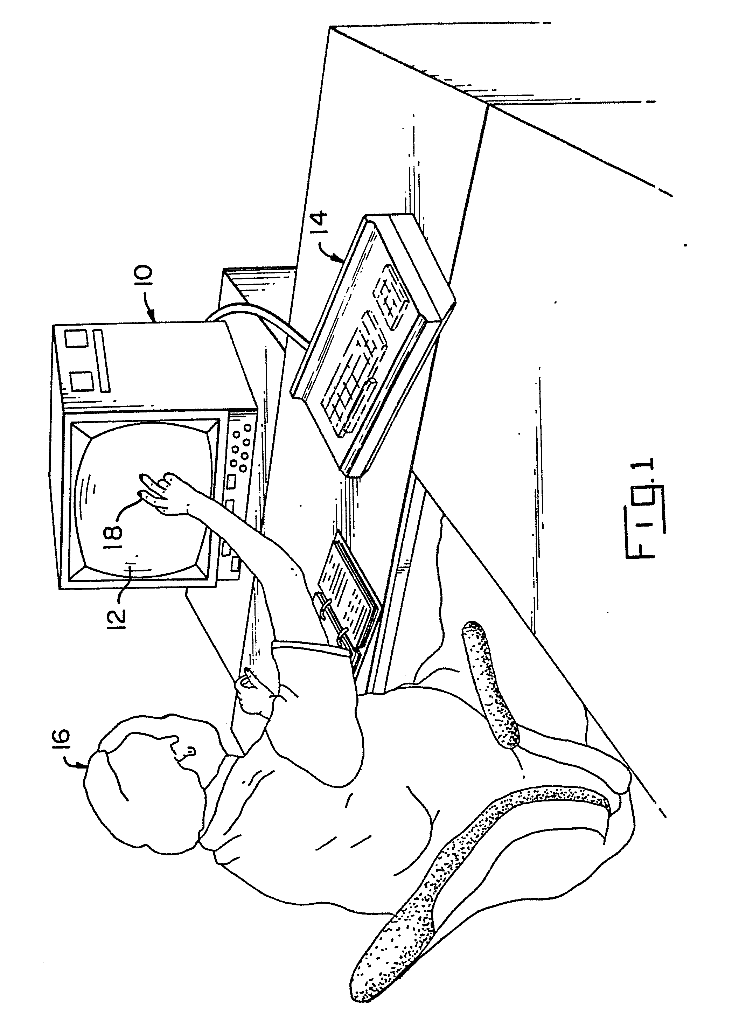

Referring now to Figure 1 there is shown an illustrative embodiment of the present invention. Shown is a CRT 10 having a display area 12 and which interacts with a keypad 14. An operator 16 interacts with the display area 12 through the use of styli 18, which in the preferred embodiment of the present invention are the fingers of the operator thereby presenting a truly touch-type interactive system. It is to be understood, however, that other types of styli can and may be used without departing from the spirit and scope of the present invention such as, for example, pencils, pointers, or other similar types of apparatus. While the keypad 14 is shown, it is one of the primary objects of the present invention to utilize the keypad 14 as little as possible if at all with the operator 16 utilizing the stylus 18 for direct interaction with the CRT 10. A touch input area is generally defined by what the operator 16 sees in the display area 12 and would have a cursor 13 (not shown) viewable by the operator 16. In the preferred embodiment of the present invention, this touch area utilizes emitters which are disposed on the top and one side of the display with detectors located on the bottom and opposite side thereby forming an infrared light beam matrix (not shown). However, it is to be understood that many other types of touch input mechanisms may be utilized such as, for example, a switch or membrane matrix disposed on the display area 12, capacitive sensors or switches, or acoustic sound wave methods, all of which are known to one skilled in the art.

In order to more readily understand the present invention a brief description or overview will now be given by way of example which will thereafter be followed by a much more detailed description. Accordingly, if an operator 16 is perhaps using a Computer Aided Design or Computer Aided Manufacturing program (CAD/CAM) he will be using his fingers 18 as a stylus to move lines, changes views or the like. However when the operator 16 needs to more precisely move a stylus or perhaps does not want the stylus to appear immediately under his finger

18, as is generally the case in present stylus systems, he would simply insert two noncontiguous styli 18, which in the preferred embodiment of the present invention fingers 18 onto the display area 12. The touch input device (numbered 51 for clarity purposes) itself is actually composed of various individual components and generally would include a mechanism to detect stylus presence and decoding circuitry, which may include software, for interaction with a CRT or another computer or the like. This would then be registered by a touch input device, which in the preferred embodiment of the present invention is a infrared light beam matrix, but as mentioned may be any type of touch input entry device. This would then change the cursor into a Mouse Mode whereby the operator 16 simply by inserting a stylus 18 anywhere onto the display area 12 would cause the cursor to move in the same direction and at the same speed as the stylus without having to position his finger 18 over the cursor. Thereafter, if the operator 16 desires to go back to the previous mode he simply reinserts two noncontiguous styli onto the touch entry device which is then recognized and executed. Further, utilizing this method it is possible for the operator 16, simply by insertion of two noncontiguous styli, to change modes of the program with which he is interacting. Therefore he may simply step through a series of modes or as in the above example, toggle between two modes. It should also be understood, however, that the Mouse Mode may be used independent of the manner of mode change discussed.

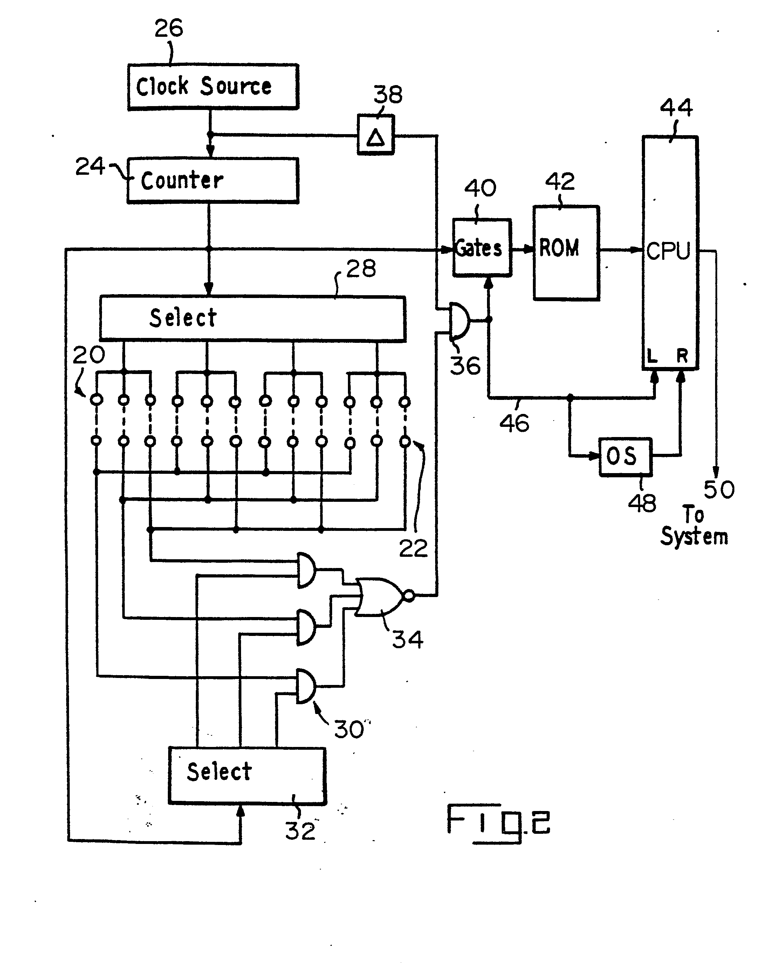

Referring now to Figure 2, there is shown a functional block diagram of the apparatus for carrying out the preferred embodiment of the present invention. However, depending upon different touch input mechanisms or circumstances, other types of apparatus can and may be utilized without departing from the spirit and scope of the present invention. A detailed description of the apparatus utilized may be found in pending U.S. Patent Application Serial No. 568,044 entitled "Cursor Control Apparatus and Method" by Carroll et al, and filed on January 4, 1984, and

which is expressly incorporated by reference herein. Accordingly, only a brief description of the apparatus of Figure 2, which may be called, generally, a touch input entry control device, will be had below with the exception that the differences between the referenced apparatus and the present apparatus will be more fully described. A counter 24 receives clock pulses from a source of clock pulses 26. For each pulse of the clock generator 26, the counter 24 is incremented, and continuously counts through its entire radix. The multibit output of the counter is connected to the inputs of a selector circuit 28, the outputs of which are connected so as to drive light emitting diodes 20, although other light sources may be utilized thereby creating light beams at times within each cycle which is determined by the selector circuit 26. Three light sources 20 are selected at a time as members of a single group, although in the preferred embodiment of the present invention the three light sources which are selected are not directly adjacent each other. Various photodetectors 22 are all connected in groups to a plurality of gates 30 which are enabled by a select circuit 32 in accordance with the output of the counter 24. Preferably, the light emitters 20 are driven in groups, so that a plurality of lamps are energized at the same time, and the photodetectors 22 are enabled in groups, with only one member of the selected light emitter group corresponding to one member of the selected photodetector group at any given time. This allows for the inspection of individual light beams at individual time slots within a scanning cycle, i.e., a complete cycle of the counter 24. However, individual emitters and/or detectors may be driven at any given instant or other groups such as two may be utilized. If the selected group of photodetectors 22 produces an output pulse, the beam associated with that time slot is recognized as not being interrupted. If no pulse is produced by the selected group of photodetectors during a time slot, the beam associated with that time slot is recognized as being interrupted. The signal from the selected group of photodetectors 22 is passed through a NOR gate 34 to an input of an AND gate 36, which has its other input connected to a synchronizing pulse drive from the clock source 26 and is delayed by a delay unit 38 thereby allowing the pulse to arrive at the gate 36 at the proper time for sampling a selected group of photodetectors 22. The gate 36 is enabled during the time slot corresponding to an interrupted beam and enables a gate circuit 40 to pass the multibit output of the counter 24 to the input of a Read Only Memory (ROM) 42. The ROM decodes the interrupted beam identifier signal from the gate 40 and produces a group of control signals which are presented to a CPU shown at 44 and loaded thereinto by means of a strobe pulse from the AND gate 36 over a line 46. In this manner, the CPU 44 is given an address which corresponds to a hit by a stylus. It is to be understood that the block diagram of Figure 2 is only illustrative of the various individual functions carried out by the apparatus and does not include other parts which interface with the CPU 44 such as memory devices and a controller for a video display terminal but which are readily known and understood by one skilled in the art. Further, conventional logic circuits may be combined in various ways to provide signals to a computer system which indicates that a given beam has been interrupted or a switch matrix may have been used. While the embodiment of Figure 1 does show only twelve beams of which only one axis at a time may be interrogated, it is readily obvious to one skilled in the art that this number of beams may be expanded to accommodate more or less beams and more or less than one axis may be interrogated at a time. The CPU 44 in the preferred embodiment of the present invention interacts with the ROM 42 and other addressable memory (not shown) to determine the number and location of styli which may then be presented as an output signal 49 (not shown) to the system shown generally at 50 which in the preferred embodiment of the present invention is a CRT or cursor controller and which could have a number of other devices connected such as another computer or an

0156593

interface device.   In this manner cursor movement may be controlled or a number of commands may be given.

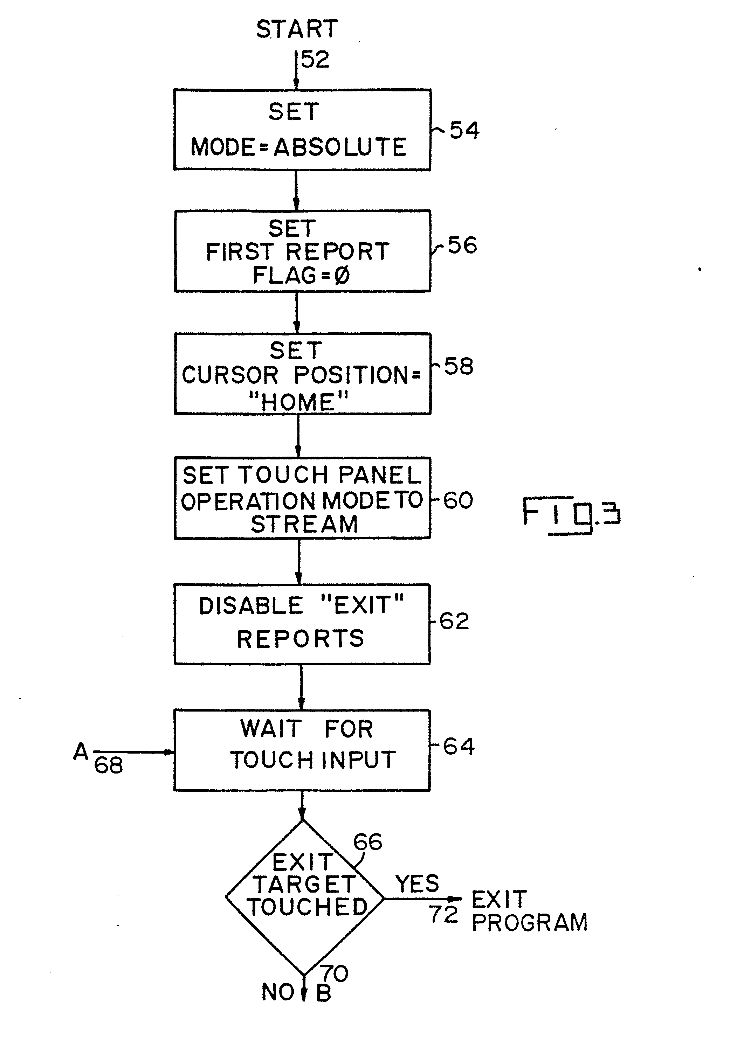

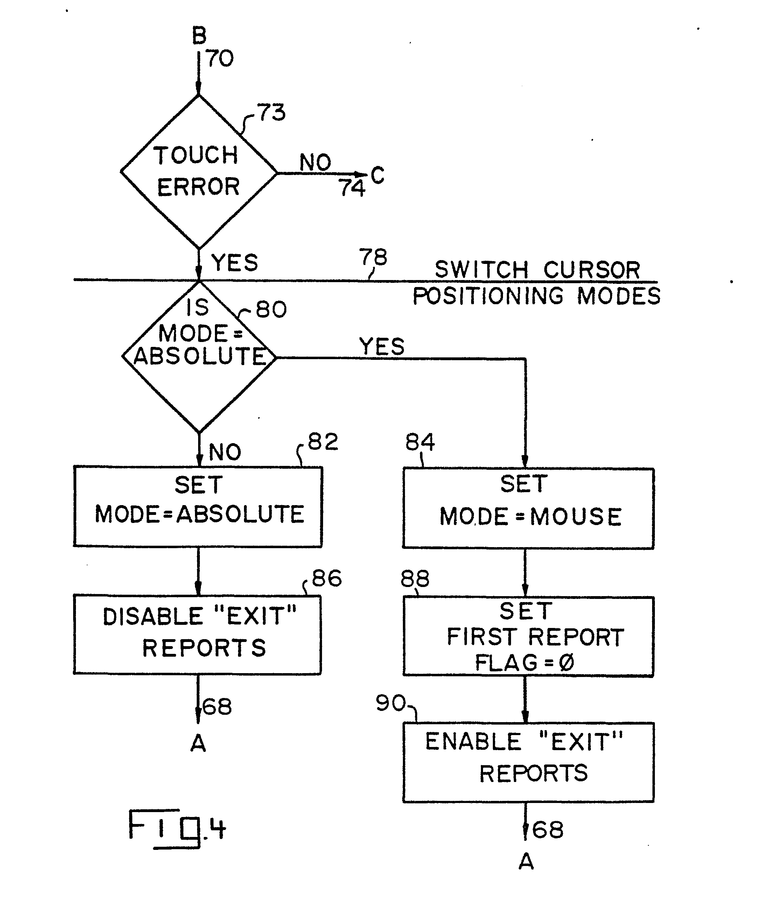

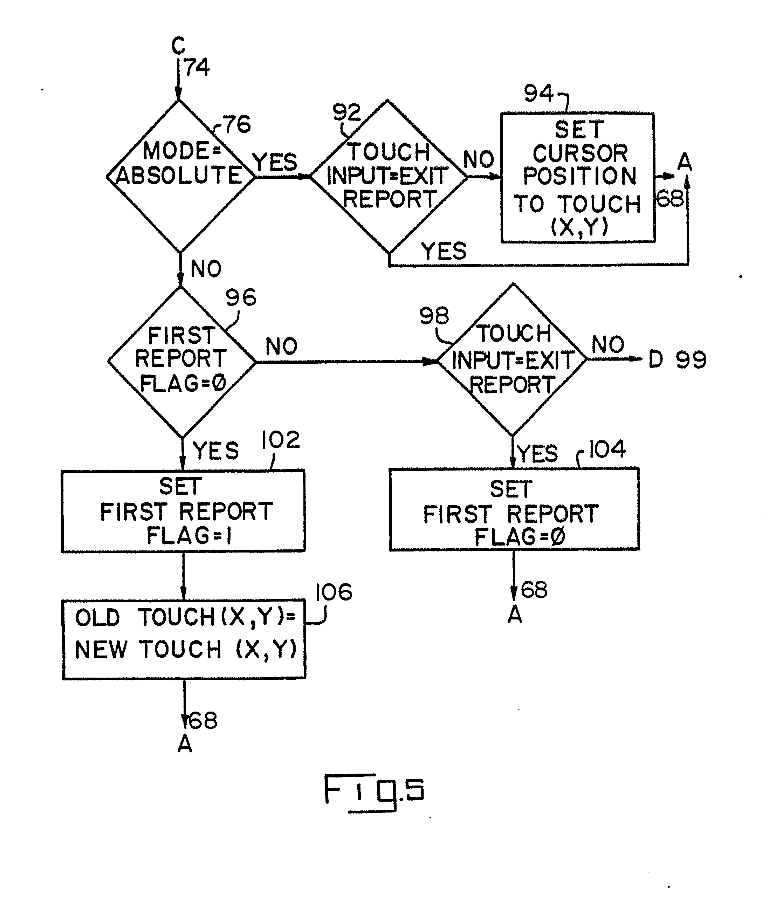

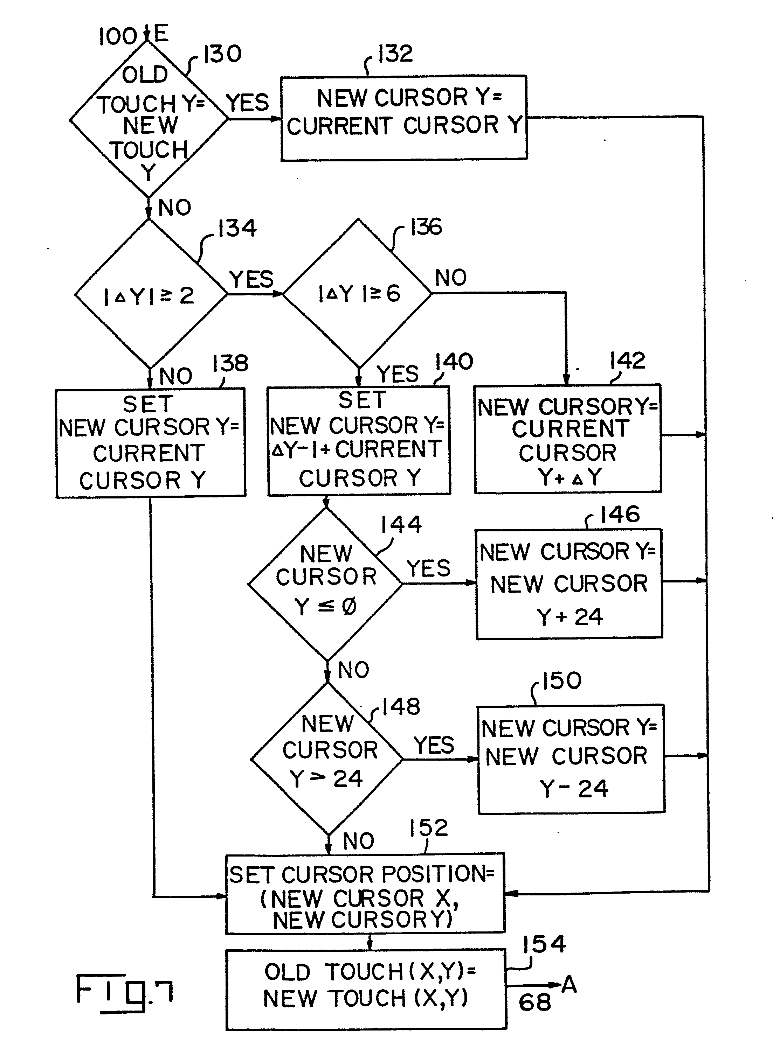

Referring now to Figures 3 through 7 a flow chart of a program which is used is illustrated and which is stored in memory such as PROMS (not shown) with the PROMS being addressable by the CPU 44. However it is to be understood that hardware or other firmware or arrangements may be utilized to accomplish the same purpose without departing from the spirit and scope of the present invention. The program begins at the Start Unit 52 which is in an Absolute Mode.   This is where the cursor tracks the movement of the stylus, that is the cursor will move to the exact position of the stylus. The program is placed into the Start Mode by any number of arrangements such as an input from a keypad or in the preferred embodiment of the present invention by the touching of the display area 12 at an appropriately designated location.   Upon the initiation of the Start Mode at unit 52, a number of conditions are thereafter set up.   These conditions include setting the mode to the Absolute Mode at unit 54, setting the First Report Flag equal to 0 at unit 56, setting the Present Cursor Position equal to the Home Position at unit 58, setting the touch panel operation mode to Stream at unit 60 (thereby enabling the cursor to attempt to remain positioned under the stylus), disabling all Exit Reports at unit 62 (that is ignoring the location of a stylus when it exits or leaves the touch input area), and finally to unit 64 where a Waiting Mode is set up for receiving a touch input.   Thereafter, unit 66 Exit Target Touched interrogates the display to see if the operator wishes to exit the entire program.   This, in the preferred embodiment of the present invention, is accomplished by the operator touching a specific marked portion of the screen or display which may state "Exit" or "End" and thereby place the CRT into another programming mode entirely.   In this manner if the Exit Target Area has been touched then a TRUE or YES condition exists and an exiting of the program will be accomplished at unit 72.   In the event that this exit area has

0156593

not been touched, a NO condition will exist at 70B, and will then be presented to unit 73 for Touch Error analysis. Unit 73 in analyzing Touch Error will analyze the number of hits or broken beams to determine the position and number of styli present. In the event that there is only one stylus present then a non-error or NO condition exists which is presented to 74C which is then in turn presented to unit 80 Mode Equals Absolute. In the preferred embodiment of the present invention, the use of two noncontiguous styli is utilized for switching into a Mouse Mode (numbered 53 for clarity purposes and would actually include the software steps following) although it is to be understood that three or more noncontiguous styli may be utilized or a stylus of a particular shape or size, without departing from the spirit and scope of the present invention. Accordingly, when unit 73 Touch Error analyzes the styli presented to the touch input area, should two noncontiguous styli be present then a YES condition exists such that a Switch Cursor Positioning Mode Change 78 occurs and which could therefore be generally considered as a mode changing device or event. However, should a nonacceptable condition or error be present, the input is ignored. Should two noncontiguous styli be presented then, as mentioned earlier, a YES condition exists which is then presented to unit 80 which looks at the mode in which the system is presently operating. Accordingly, should the operator decide to change modes, the operator would present two noncontiguous styli to the display or touch input area and would then remove one of the styli with only one stylus now being necessary to operate in the new mode. As mentioned, at unit 80 the present mode is analyzed and if the system is in the Absolute Mode, that is the cursor is attempting to remain under the stylus and move along with it, a YES condition would exist. However if the unit was previously in the Mouse Mode a NO condition would exist. Therefore, in the case where an Absolute Mode already existed, a YES condition would exist which would then be presented to unit 84 and therefore set the unit into a Mouse Mode while an Absolute Mode would be set at unit 82 if the previous mode had been a Mouse Mode or any other mode. In this manner, unit 80 acts as a toggle between one mode or the other. It is to be understood, however, that without departing from the spirit and scope of the present invention, unit 80 might simply look for a touch error condition which would be initiated by, for example, two noncontiguous styli and simply sequentially toggle from one mode to the next vis-a-vis the input of two noncontiguous styli into perhaps a dozen different modes before finally returning to a home mode. If the mode has been set as Absolute at unit 80, it is then presented to unit 86 disabling the Exit Reports which is thereby in turn presented to a unit 68 and thereafter to a unit 64 to wait for a touch input which, as mentioned previously, is a Waiting Mode. After the mode has been set to the Mouse Mode in unit 84, it is then presented to unit 88 which sets the first Report Flag equal to zero and thereby indicates that no reference point is established. This is then presented to unit 90 enabling the Exit Reports which is then presented to 68A and again in turn to unit 64 which is a Waiting Mode. In this manner a loop is established such that the mode will stay the same until two noncontiguous styli are again presented to the touch input area whereafter a change of modes from absolute to mouse or mouse to absolute will be initiated.

Thereafter, the system will shift through units 64, 66 to Touch Error unit 73 regardless of the mode it is in. If no touch error is realized, this condition is presented to unit 76 Mode Equals Absolute Mode. If in fact the mode is the Absolute Mode, a YES condition will exist which is then presented to unit 92 Touch Input Equals Exit Report. Thereafter if the stylus is exited from the touch input entry area, a YES condition will exist which is then presented to 68A. However, if the stylus is not exited from the touch input area, a NO condition will exist which is then presented to unit 94 Set Cursor Position to Touch (X, Y) and thereafter to 68A. In this manner the cursor will move relative to the stylus position. However, should the mode be a non-absolute mode in unit 76, a NO condition, as mentioned, will exist which is then presented to unit 96 which then checks to see if the First Report Flag equals zero. This in effect defines a relative mode with unit 96 interrogating whether a reference point has or has not been set. Accordingly, should the First Report Flag equal zero, a YES condition would exist which would represent that a reference point has not been set which would then be presented to unit 102 so as to set the first Report Flag equal to 1 and thereby setting a reference point which is the position of the stylus. This is then presented to unit 106 Old Touch Position Equals New Touch Position whereby the reference point is updated which is then presented through 68A to unit 64. Should the First Report Flag in unit 96 not equal zero, it is then presented to unit 98 which in effect inquires whether the touch input is equal to the exit report. If this is a TRUE or YES condition, then the stylus has not moved and is then presented to unit 104 which sets the First Report Flag equal to zero and is then presented via 68A to unit 64. In this manner if a finger is removed, an exit report is presented through unit 104 to unit 64. However, if a finger has not been removed from the touch input area, then an exit report is not generated and a NO condition is indicated which is then presented through 99D to unit 108 which in effect inquires whether the Old Touch X is Equal to the New Touch X. This in effect interrogates the position of the stylus in the X direction. If the X coordinates have not changed, then a YES condition exists which is then presented to unit 110 which defines the New Cursor X Coordinate as the Current Cursor X Coordinate which in effect does not change the X coordinate of the cursor and which is then presented through 100E for a Y Coordinate Analysis as will be discussed more fully below. If, however, the old touch X position does not equal the new touch X position in unit 108, a NO condition would exist which represents that the stylus has moved in the X coordinate plane. This is then presented to unit 112 which determines the magnitude of this change. If in fact this magnitude is defined as less than two units, a NO condition exists which is then presented to unit 116 Set New Cursor X Equals Current Cursor X which is then presented through 100E for Y Coordinate Analysis. It is to be understood that this designation of two units is an arbitrary number which may be changed, but is used as a means of steadying the cursor if the stylus has moved what is thought to be an imperceptible amount, due to perhaps an unsteady finger. If, however, the units of movement in the X direction are greater than or equal to two units, a YES condition exists which is then presented to unit 114 which in effect checks to see if the units moved are between the areas of three to six units or above six units. If the number of units in the X direction is greater than six, then a NO condition would exist which is then presented to unit 120 which sets the New Cursor X Position Equal to the Change in X Plus the Current Cursor Position of X, which is then presented to 100E for Y Axis Analysis. If, however, the number of units in the X direction is between two and six, the new cursor X position is set equal to the Change in X Minus 1 Plus the Current Cursor X Position which is then presented to unit 122. It should be mentioned that in unit 122, where it is determined whether the new cursor X position is less than or equal to zero, a wrap-around function is begun. Therefore if the cursor is, for example, at the far left side of the screen and the stylus indicates that continued movement to the left is desired, the cursor will wrap around and reappear at the far edge of the right side of the screen. Accordingly, should the new cursor X be less than or equal to zero, a YES condition will exist which defines the New Cursor X as the New Cursor X plus 80, thereby causing the mentioned wrap-around. It is to be understood that in the preferred embodiment of the present invention 80 is utilized as the number of columns present on the CRT. However, more or less columns may be utilized depending upon individual CRT design without departing from the spirit and scope of the present invention. Should the new cursor X position not be less than or equal to zero in unit 122, a NO condition exists which is then presented to unit 126 to check if the new cursor position X is greater than 80. If in fact it is greater than 80, a YES condition exists which is then presented to unit 128 which subtracts 80 from the X position by defining new cursor X equal to new cursor X minus 80. In this manner the cursor would wrap around from the right side of the screen to the left side of the screen as defined by the example discussed previously. The outputs of units 124 and 128 are then presented to 100E. If, however, the new cursor X position is not greater than 80 in unit 126, a NO condition exists which is simply presented through 100E.

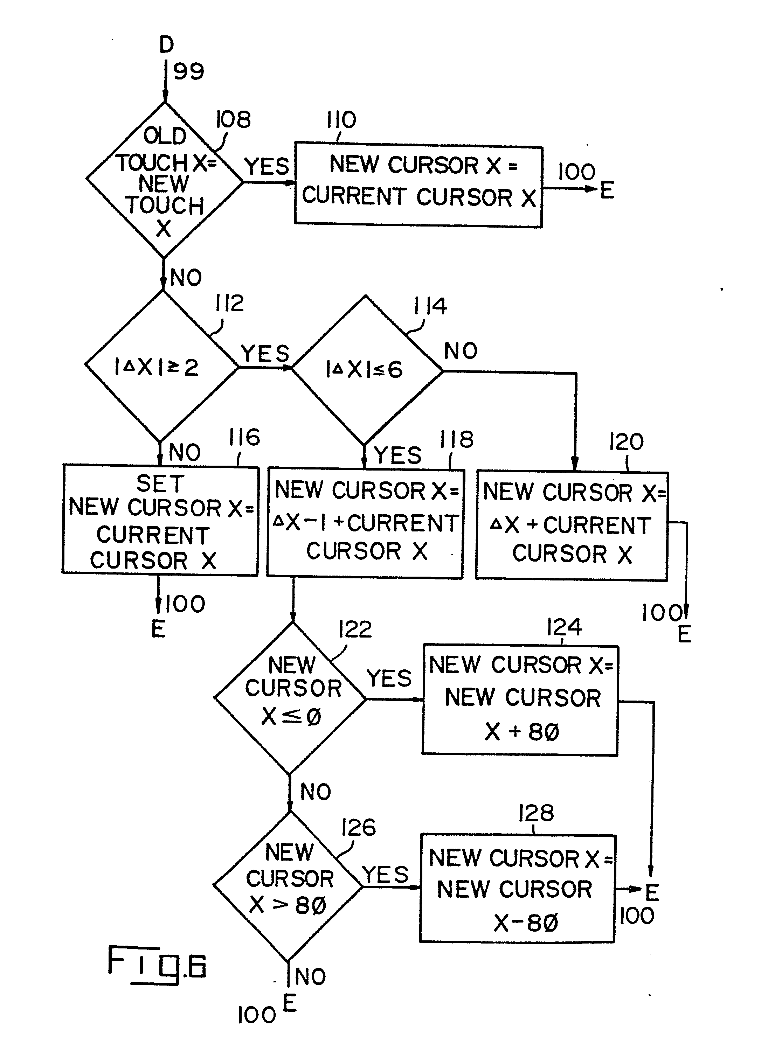

This is then presented to unit 130 Old Touch Y Equals New Touch Y which similarly to the X Axis Analyses of Figure 6 performs the same function such as cursor wrap-around and checking for the magnitude of stylus movement. However, instead of the outputs being presented to 100E, they are presented to unit 152 which sets the cursor position equal to a new cursor X and a new cursor Y which thereafter in unit 154 defines the Old Touch X, Y Position Equal to the New Touch X, P position so as to update the position of the stylus which is then presented via unit 68A back to unit 64.

In this manner when the operator wishes to move the cursor a certain distance without having his finger or stylus in the way, he merely inserts two fingers into the touch input area which thereby changes the mode from an absolute or stream mode to a Mouse Mode and thereby, through the use of one finger, moves the cursor. Once in the Mouse Mode it makes no difference where the operator inserts his finger such that movement in any direction and at any speed is followed by exact paralleling of the cursor in the same direction and at the same speed. When the operator thereafter decides to go into a different mode or back to the absolute mode, he simply reinserts two fingers into the touch input area and then operates as he did prior to the Mouse Mode.

It is to be remembered that many variations of the present invention may be utilized without departing from the spirit and scope of the present invention. Such variations may include the use of displays other than a CRT such as a flat panel display or more conventional television screens. Additionally, the touch input area may be physically offset from the display. Further, the number of styli utilized may indicate the type of mode change. For example, the use of two noncontiguous styli may indicate a mode change from a first mode to a second mode, while three noncontiguous styli may indicate a mode change from a first mode to a third mode. Additionally, the movement of the cursor in relation to the movement of the stylus may be scaled or non linear such that large movement of the stylus results in small movement of the cursor or the cursor may be moved slower or faster than the stylus. Further, the cursor may be a letter or number so as to indicate the mode it is in (M for Mouse and A for Absolute, etc.) or the program being utilized.

Therefore, in addition to the above-enumerated advantages, the disclosed invention produces a method for instituting mode changes or precise relative cursor positioning without the use of additional expensive hardware or without the use of separate input devices such as a tabletop mouse or a keypad. Further, the present invention may readily be retrofitted to a large variety of existing touch input systems such as, for example, switch matrix, capacitance or motion wave sensors, without the need for costly or significant design or engineering changes.

CLAIMS:

1. A method for initiating a program and/or mode change in a CPU/controller (44) or the like, comprising the steps of:

a. introducing two or more noncontiguous styli (18, 18) to a touch input entry device (51);

b. detection of at least two noncontiguous styli by said touch input entry device; and

c. changing the program and/or mode of said CPU/controller or the like from the program and/or mode it was in just prior to step (a) above to another program and/or mode, in response to said detection of two or more noncontiguous styli of step (b) above.

2. A method for controlling a cursor (13) or the like on a video display (12), comprising the steps of:

a. introduction of a stylus (18) to a touch input entry device (51) at any point on said touch input entry device, wherein said point need not be adjacent said cursor or the like; and

b. moving said cursor or the like at a speed and/or direction and/or distance which is relative to any movement of said stylus of step (a).

3. A method according to claim 2 which includes the following steps which are performed prior to step (a) above, comprising the steps of:

a. introducing at least two noncontiguous styli (18, 18) to a touch input entry device;

b. detection of at least two noncontiguous styli by said touch input entry device; and

c. changing the mode of cursor movement on said video display to a mouse mode (53) in response to the detection of said styli in step (b).

4. Apparatus for instituting a program and/or mode change in conjunction with a touch input entry device (51), characterized by:

a touch input entry device for producing an output signal (49) in response to one or more styli (18) being introduced thereto; and

a mode change device (78) adapted to interact with said touch input entry device for changing the program and/or mode of a computer/controller or the like in response to the introduction of a predetermined number of styli to said touch input entry device.

5. Apparatus for controlling movement of a cursor (13) or the like on a video display (12), characterized by:

a touch input entry device (51) for determining the presence and/or position of one or more styli (18) which are introduced to said touch input entry device; and

a cursor controller device (10) connected to said video display and said touch input entry device and being adapted such that upon the introduction of one or more styli at any point on said touch input entry device, wherein said point need not be adjacent said cursor or the like, said cursor or the like is moved at a speed and/or direction and/or distance which is relative to any movement of said styli.

6. Apparatus for controlling movement of a cursor (13) or the like on a video display (12) in a manner similar to a mouse mode (53), characterized by:

a touch input entry device (51) for determining the presence and/or position of one or more styli (18) which are introduced to said touch input entry device;

a cursor controller device (10) connected to said video display and to said touch input entry device being adapted for a mouse mode such that upon the introduction of at least one stylus at any point on said touch input entry device, wherein said point need not be adjacent said cursor or the like, said cursor or the like is moved at a speed and/or direction and/or distance which is relative to any movement of said styli; and

touch input entry control device interconnected with said a touch input entry device whereby upon the introduction of two or more noncontiguous styli to said touch input entry device said controller is placed into said mouse mode.

7.   A device according to claim 5 or 6, wherein said touch input entry device is disposed adjacent said video display.

8.   A device according to claim 4, 5 or 6, wherein said touch input entry device is comprised of an infrared opto-matrix frame.

9. A device according to claim 4,5 or 6, wherein said touch input entry device is comprised of a membrane switch matrix.

10.   A device according to claim 5 or claim 6, wherein said styli are comprised of the fingers of an operator.

11.   A device according to claim 4, 5 or claim 6, wherein said touch input entry device utilises acoustic sound waves to detect said styli.

Fig.1

0156593

Fig.2

START

|52

```
┌─────────────────────┐
│        SET          │
│  MODE = ABSOLUTE    │── 54
└─────────────────────┘
           │
           ▼
┌─────────────────────┐
│        SET          │
│  FIRST REPORT       │── 56
│     FLAG = Ø         │
└─────────────────────┘
           │
           ▼
┌─────────────────────┐
│        SET          │
│ CURSOR POSITION =   │── 58
│      "HOME"         │
└─────────────────────┘
           │
           ▼
┌─────────────────────┐
│  SET TOUCH PANEL    │
│ OPERATION MODE TO   │── 60
│     STREAM          │
└─────────────────────┘
           │
           ▼
┌─────────────────────┐
│   DISABLE "EXIT"    │── 62
│     REPORTS         │
└─────────────────────┘
           │
           ▼
┌─────────────────────┐
A ──►│   WAIT  FOR         │── 64
68   │  TOUCH INPUT        │
└─────────────────────┘
           │
           ▼
```

FIg.3

EXIT TARGET TOUCHED — 66

YES ──► 72 EXIT PROGRAM

NO  B — 70

Fig.4

0156593

Fig.5

0156593

D

99

OLD TOUCH X= NEW TOUCH X 108 — YES → NEW CURSOR X = CURRENT CURSOR X 110 — 100 → E

NO

$|\Delta X| \geq 2$ 112 — YES → $|\Delta X| \leq 6$ 114 — NO →

NO

SET NEW CURSOR X = CURRENT CURSOR X 116

100
E

YES

NEW CURSOR X = $\Delta X - 1 +$ CURRENT CURSOR X 118

NEW CURSOR X = $\Delta X +$ CURRENT CURSOR X 120

100
E

NEW CURSOR X ≤ Ø 122 — YES → NEW CURSOR X = NEW CURSOR X + 8Ø 124

NO

NEW CURSOR X > 8Ø 126 — YES → NEW CURSOR X = NEW CURSOR X - 8Ø 128

E
100

NO

100 E

Fig.6

0156593

Fig.7